(19) Europäisches Patentamt
European Patent Office
Office européen des brevets

(11) Numéro de publication : **0 070 755**
**B1**

(12) **FASCICULE DE BREVET EUROPÉEN**

(45) Date de publication du fascicule du brevet : **12.02.86**

(51) Int. Cl.[4] : **C 08 F299/04**, C 08 L 67/06

(21) Numéro de dépôt : **82401209.0**

(22) Date de dépôt : **30.06.82**

(54) **Compositions durcissables à base de polyesters.**

(30) Priorité : **10.07.81 FR 8113660**

(43) Date de publication de la demande :
**26.01.83 Bulletin 83/04**

(45) Mention de la délivrance du brevet :
**12.02.86 Bulletin 86/07**

(84) Etats contractants désignés :
**AT BE CH DE FR GB IT LI LU NL SE**

(56) Documents cités :
**EP-A- 0 024 280**
**EP-A- 0 039 431**
**GB-A- 914 426**
**GB-A- 1 165 622**

(73) Titulaire : **CdF CHIMIE RESINES**
**Tour Aurore Place des Reflets**
**F-92080 Paris la Défense, Cedex 5 (FR)**

(72) Inventeur : **Meyer, Jacques**
**141 ter, rue de Saussure**
**F-75017 Paris (FR)**

(74) Mandataire : **Rieux, Michel et al**
**C d F Chimie S.A. Service Propriété Industrielle Tour Aurore Place des Reflets Cedex no. 5**
**F-92080 Paris la Défense 2 (FR)**

**EP 0 070 755 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention a pour objet des compositions à base de polyester et de monomère réticulant, présentant notamment la particularité de ne subir pratiquement pas de retrait volumique lors de la polymérisation.

On a déjà proposé diverses techniques dans le but de réduire le retrait lors de la polymérisation ou du mûrissement de résines polyesters. On a depuis longtemps fait appel à des charges et à des fibres de verre. On a également proposé d'utiliser des polymères thermoplastiques, homo ou copolymères, et renfermant éventuellement des groupements carboxyliques. Bien que l'utilisation de polymères thermoplastiques et notamment des polymères à groupements carboxyliques permette de réduire sensiblement le phénomène de retrait on observe cependant deux types de défauts à savoir une porosité non uniforme due à la formation de vides dans la phase dispersée et à l'interface matrice/phase dispersée — sans que la demanderesse ne soit liée par une explication du mécanisme de formation et de compensation du retrait — et la grande difficulté d'une pigmentation uniforme des masses à mouler, ce manque d'uniformité pouvant être dû à la différence de composition de la masse et à la distribution des vacuoles.

Or on a observé que ces défauts étaient sensiblement réduits grâce à l'emploi de certains oligoesters.

L'invention a donc pour objet en premier lieu une composition comprenant :

a) un polyester non saturé,

b) un monomère à insaturation éthylénique polymérisable,

c) un oligoester de formule :

$$\left[HO\ \overset{O}{\overset{\|}{C}}-CH=CH-\overset{O}{\overset{\|}{C}}-O\right]_x \left( R-O \right)_m-R-(OH)_y \qquad (I)$$

dans laquelle la valeur moyenne de x est comprise entre 1,5 et 2, y est égal à 2 − x, R qui peut varier d'un motif à l'autre représente un radical aliphatique linéaire ou ramifié ayant 2 à 4 atomes de carbone, m est tel que la masse moléculaire moyenne en nombre du polyether polyol (II) $(—R—O—)_m$ ROH soit compris entre 1 000 et 4 000.

Le premier constituant des compositions conformes à l'invention est un polyester insaturé. On donne la préférence aux polyesters dont l'indice d'acide est compris entre 10 et 75 et plus précisément entre 15 et 40, l'indice d'hydroxyle est compris entre 20 et 80 et la masse moléculaire entre 1 000 et 5 000 (en nombre).

Dans ce qui suit, et en l'absence d'indication contraire, l'indice d'acide est mesuré en milieu alcoolique.

De tels polyesters peuvent être choisis parmi les nombreux polymères résultant de la polycondensation d'au moins un dérivé polycarboxylique avec au moins un polyol, l'un au moins des réactifs possédant une double liaison carbone-carbone de nature éthylénique. L'expression dérivé polycarboxylique désigne les acides, les esters d'alcools inférieurs, les chlorures d'acides et les anhydrides. Lorsque l'on utilise plusieurs polyacides ou polyols il suffit que l'un des réactifs d'une famille, par exemple l'un des polyacides possède une double liaison éthylénique. A titre d'illustration des composés utilisables pour la préparation des polyesters, composés utilisables pour la préparation des polyesters, composés qui sont plus précisément bifonctionnels (diacides ou diols), on citera notamment comme acides les acides maléique, chloromaléique, bromomaléique, fumarique, chlorofumarique, bromofumarique, mesaconique, citraconique, itaconique, malonique, succinique, glutarique, sébacique, isophtalique, naphtalène dicarboxylique, cyclohexane dicarboxylique-1,4, endométhylène tétrahydrophtalique, endométhylène hexachlorophtalique ; comme diols : éthylène glycol, propylène glycol, butylène glycol-1,2, diéthylène glycol, triéthylène glycol, tétraéthylène glycol, néopentylglycol, les polyméthylène glycols et notamment les tri-, tétra-, penta-, hexa-, hepta- et octa- méthylène glycols. On peut évidemment utiliser une faible proportion de composé renfermant plus de deux groupements hydroxylés tels que le triméthylol-propane, le pentaérythritol.

Les conditions de préparation des polyesters insaturés sont abondamment décrites dans la littérature et ne constituent pas l'objet de l'invention. On peut se référer par exemple à l'ouvrage de Kirk Othmer — Encyclopedia of Chemical Technology.

A titre d'illustration de polyesters on mentionnera notamment les polyesters obtenus à partir d'un composant acide comprenant de l'anhydridre maléique, seul ou en mélange avec l'acide isophtalique.

Le second constituant des compositions est un monomère à insaturation éthylénique polymérisable. A titre d'exemples de tels monomères, dont l'emploi est bien connu dans la technique des polyesters, on peut citer le styrène, l'alphaméthylstyrène, le vinyltoluène, la p.(alphaméthylvinyl)benzophénone, le divinylbenzène, l'oxyde de vinyle et de chloro-2 éthyle, la N-vinylpyrrolidone, la vinyl-2 pyridine, l'indène, l'acrylate de méthyle, le méthacrylate de méthyle, l'acrylamide, la N-t.butylacrylamide, l'acrylonitrile, l'hexahydrotriacrylo-1,3,5-s-triazine, le phtalate d'allyle, le fumarate d'allyle, le cyanurate d'allyle, le

phosphate d'allyle, le diallylcarbonate de diéthylène glycol, le lactate d'allyle, le malonate d'allyle, le tricarballylate d'allyle, le trimésate d'allyle, le trimellate d'allyle.

Le monomère polymérisable représente généralement 10 à 60 % du poids de l'ensemble polyester/monomère.

Le troisième constituant est l'oligoester de formule (I). Cet oligoester résulte de la réaction d'anhydride maléique avec un polyether polyol II. On donne la préférence aux oligoesters présentant un indice d'acide en milieu aqueux et un indice d'acide en milieu alcoolique compris entre 25 et 100 et de préférence entre 40 et 70, l'écart entre l'indice d'acide aqueux et l'indice d'acide alcoolique, pour un même oligoester étant de préférence au maximum de 5.

Le polyéther polyol est choisi de préférence parmi les polyéthylène glycols, polypropylène glycols, poly(oxyéthylèneoxypropylène) glycols et polyoxytétraméthylène glycols dont la masse moléculaire moyenne a été indiquée précédemment. La préparation de ces polyéthers polyols est largement décrite dans la littérature et ne constitue pas un objet de l'invention.

D'une manière générale, on met en œuvre de 1,7 à 2 moles d'anhydride maléique par mole de polyol (II). La réaction est avantageusement effectuée entre 50 et 100 °C et en présence d'un système catalytique tel que le carbonate de lithium, des composés de l'étain, tels que des sels ou oxydes ou des amines, et notamment des amines secondaires ou tertiaires.

De manière générale, on utilise de 0,02 à 2 % en poids de catalyseur par rapport au poids de l'ensemble anhydride maléique/polyol.

L'oligoester de formule (I) est généralement utilisé à un taux pouvant atteintre 30 % en poids par rapport au poids de l'ensemble polyester + monomère éthylénique. De préférence ce taux est compris entre 5 et 25 %.

Les compositions conformes à l'invention peuvent être utilisées pour la préparation des compositions de moulage qui peuvent renfermer au moins l'un des additifs suivants : épaississant, charge, fibres de renforcement, catalyseur, inhibiteur de polymérisation... De telles compositions de moulage constituent un autre objet de l'invention.

L'épaississant peut être avantageusement choisi parmi les oxydes ou hydroxydes de magnésium et de calcium et, plus généralement, parmi les oxydes et hydroxydes des composés des groupes I et II de la classification périodique des éléments.

La quantité du ou des épaississants peut représenter 0,05 à 3 % du poids de l'ensemble polyester/monomère.

Les charges peuvent être choisies parmi les nombreux additifs de ce type. On mentionnera, à titre indicatif, l'argile, le talc, le carbonate de calcium, la silice, les microbilles de verre, le bioxyde de titane, le noir de carbone. La quantité de charge représente généralement 5 à 70 % du poids total de la composition.

Le matériau de renforcement est avantageusement constitué par des fibres de verre. On peut cependant utiliser d'autres fibres, associées ou non aux fibres de verre, telles que les fibres minérales (amiante), fibres de carbone, fibres métalliques, fibres naturelles (sisal, coton), fibres de polymères synthétiques (polyamides, polyesters). Lorsqu'elles sont incorporées dans les masses de moulage — en quantité pouvant représenter 5 à 70 % du poids total de la composition, les fibres présentent généralement une longueur de l'ordre de 5 à 20 mm. On peut également utiliser les compositions pour l'imprégnation de fibres, dont la longueur peut alors atteindre 50 mm, voire davantage.

Les compositions renferment généralement un catalyseur choisi parmi les composés générateurs de radicaux libres (composés peroxydés par exemple, tels que le peroxyde de benzoyle, le peroxyde de t-butyle, le peroxyde de lauroyle, le peroctoate de t-butyle). D'une manière générale, la quantité de catalyseur peut représenter de 0,1 à 5 % par rapport au poids total de la composition.

On peut en outre utiliser un inhibiteur de polymérisation — à raison d'environ 30 à environ 600 parties par million par rapport au poids de l'ensemble polyester, monomère, oligoester — (par exemple de l'hydroquinone, de la p.benzoquinone) et un agent de décollement du moule tel que les stéarates métalliques comme les stéarates de zinc, d'aluminium, de calcium.

Les compositions conformes à l'invention permettent de préparer des masses de moulage conduisant à des articles pratiquement exempt de retrait. Les pièces ainsi obtenues non seulement reproduisent parfaitement le profil ou relief du moule dans lequel elles ont été faites mais encore présentent d'excellentes qualités de surface.

Les exemples suivants illustrent l'invention.

## Exemples 1 et 2

A. Polyesters

a) On prépare un polyester à partir des produits suivants :

| | |
|---|---|
| — Anhydride maléique | 0,6 mole |
| — Acide isophtalique | 0,4 mole |
| — Diéthylène glycol | 0,35 mole |
| — Propylène glycol | 0,70 mole |

Le polyester présente un indice d'acide de 20, un indice d'hydroxyle de 30 et une masse moléculaire moyenne en nombre de 2 200.

Ce polyester est dissous dans le styrène (40 parties de styrène pour 60 parties de polyester). La solution obtenue (ci-après Résine 1) a une viscosité de 10 poises à 25 °C.

b) On prépare un polyester à partir de :

— Anhydride maléique 1 mole
— Propylène glycol 1,1 mole

Le polyester présente un indice d'acide de 35, un acide d'hydroxyle de 58 et une masse moléculaire moyenne en nombre de 1 200.

Ce polyester est dissous dans le styrène (40 parties de styrène pour 60 parties de polyester). La solution obtenue (ci-après Résine 2) a une viscosité de 8 poises à 25 °C.

B. Oligoester

A une mole de polyoxytétraméthylène glycol (masse moléculaire moyenne en nombre : 2 000) préalablement fondu à 80 °C on ajoute deux moles d'anhydride maléique. On effectue la réaction à 80 °C pendant 8 heures en présence de 0,1 % en poids de carbonate de lithium. Le produit obtenu recristallise lentement et présente un point de fusion de 34 °C, un indice d'acide aqueux de 55 et un indice d'acide alcoolique de 52.

C. Formulation

On prépare les formulations suivantes : (parties en poids).

— Résine 1 ou 2 100
— Oligoester x
— Styrène supplémentaire y
— Carbonate de calcium z
— Stéarate de zinc 5,5
— Peroctoate de t-butyle 1,25
— Magnésie calcinée 1,20
— Concentré coloré blanc 8,50

L'oligoester est introduit à l'état fondu dans la résine 1 ou 2.

Les différents produits sont mélangés pendant 10 mm sous vive agitation. Avec le mélange en résultant, on imprègne des fibres de verre (diamètre moyen 14 μm, longueur moyenne 30 mm) disposées omnidirectionnellement sur un film de polyéthylène. On recouvre l'ensemble avec un second film de polyéthylène et le fait passer sous des rouleaux calandeurs pour éliminer les bulles d'air et améliorer l'imprégnation des fibres de verre.

Le matériau préimprégné renferme 28 % en poids de verre pour un poids total de 6 $kg/m^2$.

On laisse reposer le matériau pendant 3 jours à 25 °C. On effectue ensuite une mise sous presse (2 mm à 140 °C).

On procède à une évaluation du retrait linéaire sur un disque de matière moulée de 150 mm de diamètre (différence entre le diamètre du moule et le diamètre de l'objet moulé, rapportée au diamètre du moule et exprimée en ‰) (Tableau I).

On effectue également la détermination des propriétés mécaniques (Tableau II).

Tableau I

Retrait linéaire

| Oligoester (x) \ z | | 85 | 150 | 200 | 220 |
|---|---|---|---|---|---|
| Résine 1 | 0 (témoin) | (a) 2,25 ‰ | — | — | — |
| | 10 | — | (b) 0,50 ‰ | — | — |
| | 15 | (a) 0,86 ‰ | (c) 0,56 ‰ | (d) 0,52 ‰ | — |
| Résine 2 | 15 | (c) 0,86 ‰ | | | (c) 0,13 ‰ |

(a) : y = 0 (c) : y = 18
(b) : y = 5 (d) : y = 25

Tableau II

Propriétés
(mesures effectuées avec Résine 1)

| Essai | Propriétés / Composition | | Densité | Résistance choc kg cm/cm² (N mm/mm²) | Résistance flexion kg/cm² (N/mm²) | Elasticité kg/cm² (N/mm²) |
|---|---|---|---|---|---|---|
| Témoin | Oligoester<br>charges<br>styrène | x 0<br>z 85<br>y 0 | 1,74 | 15<br>(14,4) | 1 394<br>(136,7) | 84 600<br>(8 297) |
| 1 | Oligoester<br>Charges<br>Styrène | x 10<br>z 150<br>y 5 | 1,91 | 24<br>(23,5) | 1 930<br>(189,3) | 108 000<br>(10 592) |
| 2 | Oligoester<br>Charges<br>Styrène | x 15<br>z 85<br>y 0 | 1,69 | 22<br>(21,6) | 1 850<br>(181,4) | 68 100<br>(6 679) |
| 3 | Oligoester<br>Charges<br>Styrène | x 15<br>z 150<br>y 18 | 1,78 | 17<br>(16,7) | 1 430<br>(140,2) | 71 100<br>(6 973) |
| 4 | Oligoester<br>Charges<br>Styrène | x 15<br>z 200<br>y 25 | 1,84 | 15<br>(14,4) | 1 350<br>(132,4) | 82 500<br>(8 091) |

**Revendications** (pour les Etats contractants : BE, CH, DE, FR, GB, IT, LI, LU, NL, SE)

1. Composition durcissable à base de polyester, caractérisé en ce qu'elle comprend :
a) un polyester non saturé,
b) un monomère à insaturation éthylénique polymérisable,
c) un oligoester de formule :

$$HO\left[\overset{O}{\overset{\|}{C}}-CH=CH-\overset{O}{\overset{\|}{C}}-O\right]_x\left(R-O\right)_m-R-(OH)_y \qquad (I)$$

dans laquelle la valeur moyenne de x est comprise entre 1,5 et 2, y est égal à 2 − x, R qui peut varier d'un motif à l'autre représente un radical aliphatique linéaire ou ramifié ayant 2 à 4 atomes de carbone, m est tel que la masse moléculaire moyenne en nombre du polyether polyol (II) HO $(-R-O-)_m$ ROH soit compris entre 1 000 et 4 000.

2. Composition selon la revendication 1, caractérisée en ce que le polyester non saturé présente un indice d'acide compris entre 10 et 75, un indice d'hydroxyle compris entre 20 et 80 une masse moléculaire en nombre comprise entre 1 000 et 5 000.

3. Composition selon la revendication 1, caractérisée en ce que le monomère à insaturation éthylénique représente 10 à 60 % du poids de l'ensemble polyester/monomère.

4. Composition selon la revendication 1, caractérisée en ce que l'oligoester représente jusqu'à 30 % du poids de l'ensemble polyester/monomère à insaturation éthylénique.

5. Composition selon la revendication 1, caractérisée en ce que l'oligoester résulte de la réaction de 1,7 à 2 moles d'anhydride maléique avec une mole de polyester polyol HO $(-R-O-)_m$ ROH dans laquelle R et m ont les significations données dans la revendication 1.

6. Composition selon la revendication 5, caractérisée en ce que l'indice d'acide en milieu aqueux et l'indice d'acide en milieu alcoolique de l'oligoester (I) sont compris entre 25 et 100 et de préférence entre 40 et 70, l'écart entre l'indice aqueux et l'indice d'acide alcoolique pour un même oligoester étant au maximum de 5.

7. Composition selon l'une quelconque des revendications 1 à 6, caractérisée en ce qu'elle renferme au moins un des additifs suivants : épaississant, charge, fibres de renforcement, catalyseur, inhibiteur de polymérisation.

**Revendications** (pour l'Etat contractant AT)

1. Procédé de fabrication d'articles moulés consistant à effectuer le durcissement d'une composition comprenant :
   a) un polyester non saturé,
   b) un monomère à insaturation éthylénique polymérisable,
   c) un oligoester de formule :

$$\left[HO-\overset{O}{\overset{\|}{C}}-CH=CH-\overset{O}{\overset{\|}{C}}-O\right]_x \left(-R-O-\right)_m-R-(OH)_y \qquad (I)$$

dans laquelle la valeur moyenne de x est compris entre 1,5 et 2, y est égal à 2 − x, R qui peut varier d'un motif à l'autre représente un radical aliphatique ou linéaire ou ramifié ayant 2 à 4 atomes de carbone, m est tel que la masse moléculaire moyenne en nombre du polyéther polyol (II) (OH) $(—R—O—)_m$ ROH soit compris entre 1 000 et 4 000.

2. Procédé selon la revendication 1, caractérisé en ce que la composition comprend le monomère à raison de 10 à 60 % du poids de l'ensemble polyester/monomère et l'oligoester en quantité pouvant atteindre 30 % du poids de l'ensemble polyester/monomère.

3. Procédé selon la revendication 1, caractérisé en ce que l'oligoester résulte de la réaction de 1,7 à 2 moles d'anhydride maléïque avec une mole de polyéther polyol HO $(—R—O—)_m$ ROH dans laquelle les symboles R et m possèdent la signification donnée dans la revendication 1.

4. Procédé selon la revendication 3, caractérisé en ce que l'indice d'aide en milieu aqueux et l'indice d'acide en milieu alcoolique de l'oligoester sont compris entre 25 et 100 et de préférence entre 40 et 70, l'écart entre l'indice d'acide en milieu aqueux et l'indice d'acide en milieu alcoolique étant au maximum de 5.

5. Procédé selon l'une quelconque des revendications 1 à 4, caractérisé en ce que la composition durcissable comprend en outre au moins l'un des additifs suivants : épaississant, charges, fibres de renforcement, catalyseur, inhibiteur de polymérisation.

**Claims** (for the Contracting States : BE, CH, DE, FR, GB, IT, LI, LU, NL, SE)

1. Hardenable compound with a polyester base, characterised in that it comprises :
   a) an unsaturated polyester,
   b) a polymerisable unsaturated ethylenic monomer,
   c) an oligoester of the formula :

$$HO\left[\overset{O}{\overset{\|}{C}}-CH=CH-\overset{O}{\overset{\|}{C}}-O\right]_x \left(R-O\right)_m-R-(OH)_y \qquad (I)$$

in which the mean value of x is between 1.5 and 2, y is equal to 2 − x, R which can vary for one reason or another represents a linear or ramiform aliphatic radical having 2 to 4 carbon atoms, m is such that the numerical mean molecular mass of polyether polyol (II) HO $(—R—O—)_m$ ROH is between 1 000 and 4 000.

2. Compound according to claim 1, characterised in that the unsaturated polyester has an acid number between 10 and 75, a hydroxyl number between 20 and 80 and a numerical molecular mass between 1 000 and 5 000.

3. Compound according to claim 1, characterised in that unsaturated ethylene polymer represents 10 to 60 % by weight of the polyester/monomer together.

4. Compound according to claim 1, characterised in that the oligoester represents up to 30 % by weight of the unsaturated ethylenic monomer/polyester together.

5. Compound according to claim 1, characterised in that the oligoester is produced by the reaction of 1.7 to 2 moles of maleic anhydride with one mole of polyether polyol HO $(—R—O—)_m$ ROH in which R and m are as defined in claim 1.

6. Compound according to claim 5, characterised in that the acid number in an aqueous medium and the acid number in an alcohol medium of the oligoester (I) are between 25 and 100 and preferably between 40 and 70, the difference between the aqueous acid number and the alcohol acid number for the same oligoester being 5 at the maximum.

7. Compound according to any one of claims 1 to 6, characterised in that it contains at least one of the following additives : thickener, reinforcement fibre filling material, catalyst, and polymerisation inhibitor.

**Claims** (for the Contracting State AT)

1. Process of manufacture of hardenable compound according to the hardening is achieved with a composition comprising :

a) an unsaturated polyester,

b) a polymerisable unsaturated ethylenic monomer,

c) an oligoester of the formula :

$$HO \left[ \overset{\overset{O}{\|}}{C}-CH = CH-\overset{\overset{O}{\|}}{C}-O- \right]_x (-R-O-)_m \quad -R-(OH)_y \qquad (I)$$

in which the mean value of x is between 1.5 and 2, y is equal to 2 – x, R which can vary for one reason or another represents a linear or ramiform aliphatic radical having 2 to 4 carbon atoms, m is such that the numerical mean molecular mass of polyether polyol (II) HO $(—R—O—)_m$ ROH is between 1 000 and 4 000.

2. Process according to claim 1, characterised in that unsaturated ethylene polymer represents 10 to 60 % by weight of the polyester/monomer together and the oligoester represents up to 30 % by weight of the unsaturated ethylenic monomer/polyester together.

3. Process according to claim 1, characterised in that the oligoester is produced by the reaction of 1.7 to 2 moles of maleic anhydride with one mole of polyether polyol HO $(—R—O—)_m$ ROH in which R and m are as defined in claim 1.

4. Process according to claim 3, characterised in that the acid number in an aqueous medium and the acid number in an alcohol medium of the oligoester (I) are between 25 and 100 and preferably between 40 and 70, the difference between the aqueous acid number and the alcohol acid number for the same oligoester being 5 at the maximum.

5. Process according to any one of claim 1 to 4, characterised in that hardenable compound contains at least one of the following additives : thickener, reinforcement fibre filling material, catalyst, and polymerisation inhibitor.

**Patentansprüche** (für die Vertragsstaaten : BE, CH, DE, FR, GB, IT, LI, LU, NL, SE)

1. Härtbare Zusammensetzung auf Polyesterbasis, dadurch gekennzeichnet, daß sie enthält :

a) einen ungesättigten Polyester,

b) ein polymerisierbares, äthylenisch ungesättigtes Monomer,

c) einen Oligoester der Formel :

$$\left[ HO-\overset{\overset{O}{\|}}{C}-CH = CH-\overset{\overset{O}{\|}}{C}-O \right]_x (-R-O-)_m -R-(OH)_y \qquad (I)$$

in der der mittlere Wert von x zwischen 1,5 und 2 beträgt, y gleich 2 – x ist, R, das von einer Einheit zur anderen variieren kann, ein aliphatisches lineares oder verzweigtes Radikal mit 2 bis 4 Kohlenstoffatomen bedeutet, und m so ist, daß die durch das Zahlenmittel ausgedrückte Molekularmasse des Polyätherpolyols (II) HO $(—R—O—)_m$ ROH zwischen 1 000 und 4 000 beträgt.

2. Zusammensetzung nach Anspruch 1, dadurch gekennzeichnet, daß der ungesättigte Ester eine Säurezahl zwischen 10 und 75, eine Hydroxylzahl zwischen 20 und 80 und eine durch das Zahlenmittel bestimmte Molekularmasse zwischen 1 000 und 5 000 aufweist.

3. Zusammensetzung nach Anspruch 1, dadurch gekennzeichnet, daß das äthylenisch ungesättigte Monomer 10 bis 60 Gew.-% des Polyester/Monomer-Systems ausmacht.

4. Zusammensetzung nach Anspruch 1, dadurch gekennzeichnet, daß der Oligoester bis zu 30 Gew.-% des Systems aus Polyester und äthylenisch ungesättigem Monomer ausmacht.

5. Zusammensetzung nach Anspruch 1, dadurch gekennzeichnet, daß der Oligoester aus der Reaktion von 1,7 bis 2 Mol Maleinsäureanhydrid mit 1 Mol Polyätherpolyol der Formel HO $(—R—O—)_m$ ROH resultiert, in der die Symbole R und m die in Anspruch 1 angegebene Bedeutung haben.

6. Zusammensetzung nach Anspruch 5, dadurch gekennzeichnet, daß die Säurezahl in wässrigem Milieu und die Säurezahl in alkoholischem Milieu des Oligoesters (I) zwischen 25 und 100 und vorzugsweise zwischen 40 und 70 betragen, wobei der Unterschied zwischen der Säurezahl in wässrigem Milieu und der Säurezahl in alkoholischem Milieu für ein und denselben Oligoester höchstens 5 beträgt.

7. Zusammensetzung nach irgendeinem der Ansprüche 1 bis 6, dadurch gekennzeichnet, daß sie mindestens einen der folgenden Zusätze enthält : Verdickungsmittel, Füllstoff, Verstärkungsfasern, Katalysator, Polymerisationsinhibitor.

**Patentansprüche** (für den Vertragsstaat AT)

1. Verfahren zur Herstellung von geformten Artikeln durch Aushärten einer Zusammensetzung, die enthält :

a) einen ungesättigten Polyester,
b) ein polymerisierbares äthylenisch ungesättigtes Monomer,
c) einen Oligoester der Formel :

$$\left[HO-\overset{\overset{O}{\|}}{C}-CH=CH-\overset{\overset{O}{\|}}{C}-O-\right]_x (-R-O-)_m-R-(OH)_y \qquad (I)$$

in der der mittlere Wert von x zwischen 1,5 und 2 beträgt, y gleich 2 – x ist, R, das von einer Einheit zur anderen variieren kann, ein aliphatisches lineares oder verzweigtes Radikal mit 2 bis 4 Kohlenstoffatomen bedeutet, und m so ist, daß die durch das Zahlenmittel ausgedrückte Molekularmasse des Polyätherpolyols (II) (OH) $(—R—O—)_m$ ROH zwischen 1 000 und 4 000 beträgt.

2. Verfahren nach Anspruch 1, dadurch gekennzeichnet, daß die Zusammensetzung das Monomer in einer Menge von 10 bis 60 Gew.-% des Polyester/Monomer-Systems und den Oligoester in einer Menge enthält, die 30 Gew.-% des Polyester/Monomer-Systems erreichen kann.

3. Verfahren nach Anspruch 1, dadurch gekennzeichnet, daß der Oligoester aus der Reaktion von 1,7 bis 2 Mol Maleinsäureanhydrid mit 1 Mol Polyätherpolyol der Formel HO $(—R—O—)_m$ ROH resultiert, in der die Symbole R und m die in Anspruch 1 angegebene Bedeutung haben.

4. Verfahren nach Anspruch 3, dadurch gekennzeichnet, daß die Säurezahl in wässrigem Milieu und die Säurezahl in alkoholischem Milieu des Oligoesters zwischen 25 und 100 und vorzugsweise zwischen 40 und 70 betragen, wobei der Unterschied zwischen der Säurezahl in wässrigem Milieu und der Säurezahl in alkoholischem Milieu höchstens 5 beträgt.

5. Verfahren nach irgendeinem der Ansprüche 1 bis 4, dadurch gekennzeichnet, daß die härtbare Zusammensetzung weiters mindestens einen der folgenden Zusätze enthält : Verdickungsmittel, Füllstoffe, Verstärkungsfasern, Katalysator, Polymerisationsinhibitor.